Europäisches Patentamt

European Patent Office

Office européen des brevets

(19)

(11) Publication number: 0 318 142
A1

# EUROPEAN PATENT APPLICATION

(21) Application number: 88309312.2

(22) Date of filing: 06.10.88

(51) Int. Cl.⁴: **B29C 65/02**

(30) Priority: **13.10.87 GB 8723976**

(43) Date of publication of application:
**31.05.89 Bulletin 89/22**

(84) Designated Contracting States:
**DE GB IT SE**

(71) Applicant: **THE WELDING INSTITUTE**
**Abington Hall**
**Abington Cambridge CB1 6AL(GB)**

Applicant: **EXPLOWELD LIMITED**
**5 Balfour Place**
**London W1Y 5RG(GB)**

(72) Inventor: **Taylor, Nicola Suzanne**
**89 York Street**
**Cambridge, CB1 2PZ(GB)**
Inventor: **Jones, Stephen Bruce**
**2 Priams Way**
**Stapleford Cambridge, CB2 5DT(GB)**
Inventor: **Watson, Martin Norman**
**3 Sudley Grove**
**Hardwick Cambridge, CB3 7XS(GB)**
Inventor: **Lazari, Lazaris**
**c/o Hotforge Limited Devanta House**
**Riverside Drive Aberdeen AB1 2SL(GB)**

(74) Representative: **Skone James, Robert Edmund**
**et al**
**GILL JENNINGS & EVERY 53-64 Chancery**
**Lane**
**London WC2A 1HN(GB)**

(54) **High rate forming and joining of plastics.**

(57) A method of joining plastics materials (1,2) comprises impacting the materials together under the influence of explosive charge at a sufficient velocity to induce local heating and thereby bonding between the materials.

Fig.3a.

STAND OFF GAP

# HIGH RATE FORMING AND JOINING OF PLASTICS

This invention relates to the high rate forming and joining of plastics materials, particularly thermoplastics, including where applicable plastics alloys of thermoset and thermoplastic materials.

High rate joining refers to methods and techniques for accomplishing joints and shaped profiles of more than 100mm$^2$ surface area in 0.1 sec. Much higher rates are also feasible, such as more than 10,000mm$^2$ in 0.1 sec and even in excess of 1m$^2$ in 0.1 sec. These techniques are to be contrasted with present day methods for forming and joining plastics materials, where the plastics component may be heated in an autoclave or equivalent for periods extending from several tens of minutes to hours. Also radiant heating of the mating surfaces over periods upwards of tens of minutes or so is known. Moreover, hot plate methods of forming and joining are known in which the mating interfaces are heated by contact with a preheated plate over periods of the order of 1 to 20 minutes in order to allow a sufficient heat soak into the body of the material. More recently methods of electric resistance and induction heating, particularly of carbon fibre reinforced thermoplastics, lead to joining times of the order of 1 second, such as described in GB-A-2200590 and EP-A-0281347.

In accordance with the present invention, a method of joining plastics materials comprises impacting the materials together at a sufficient velocity to induce local heating and thereby bonding between the materials.

We have found that it is possible to impact plastics at a high enough explosion rate to achieve bonding, the explosion rate being low enough, however, to avoid destruction of the materials.

High rate forming and joining refers to techniques where the mating surfaces are impacted together at a sufficient velocity to induce intimate contact resulting in interface bonding accompanied by local heating and possibly melting of a thin skin of the plastics material. At the collision zone the pressure at the interface greatly exceeds the yield strength of the materials concerned, and may even exceed 1kN/mm$^2$ and greater. Moreover these conditions promote the flow of plasticised material from the faying surfaces which lead to an intimate local removal of contamination or other surface materials or compounds which tend to inhibit bonding. Also temperatures in excess of 200°C and even in excess of 400°C may be induced in the vicinity of the mating interface, particularly if the components are preheated to some degree. However the objective of high rate forming and joining is to avoid raising the whole component or a major part thereof to a softening temperature. High rates of forming and joining are accomplished by means of explosive charges, rapidly expanding gases (compressed typically to 1kN/mm$^2$ and greater) to produce a pressure wave, high pressure water jet systems or even by direct mechanical shock. An example of the latter is the well known magnaforming technique in which a conducting metal is rapidly deformed by a heavy current pulse which induces a corresponding current in the conducting material to cause electromagnetic interaction. Equally explosive joining and forming of metals is wellknown and includes techniques such as exploding wires in a fluid to cause pressure waves as well as detonating explosive charges to force one metal component against another at a high velocity. Such techniques have not been applied to plastics because of the risk in damaging the materials.

An example of a method according to the present invention will now be described with reference to the accompanying drawings, in which:-

Figure 1 is an enlarged photograph of one example of a joint produced according to the invention;

Figure 2 is a photograph of a second example of a joint produced according to the invention;

Figures 3a-3c are schematic, cross-sections of three different examples of the invention;

Figure 4 is a photograph illustrating flame spraying plastic onto aluminium;

Figure 5 illustrates flame spraying apparatus; and

Figure 6 illustrates a spot welding arrangement.

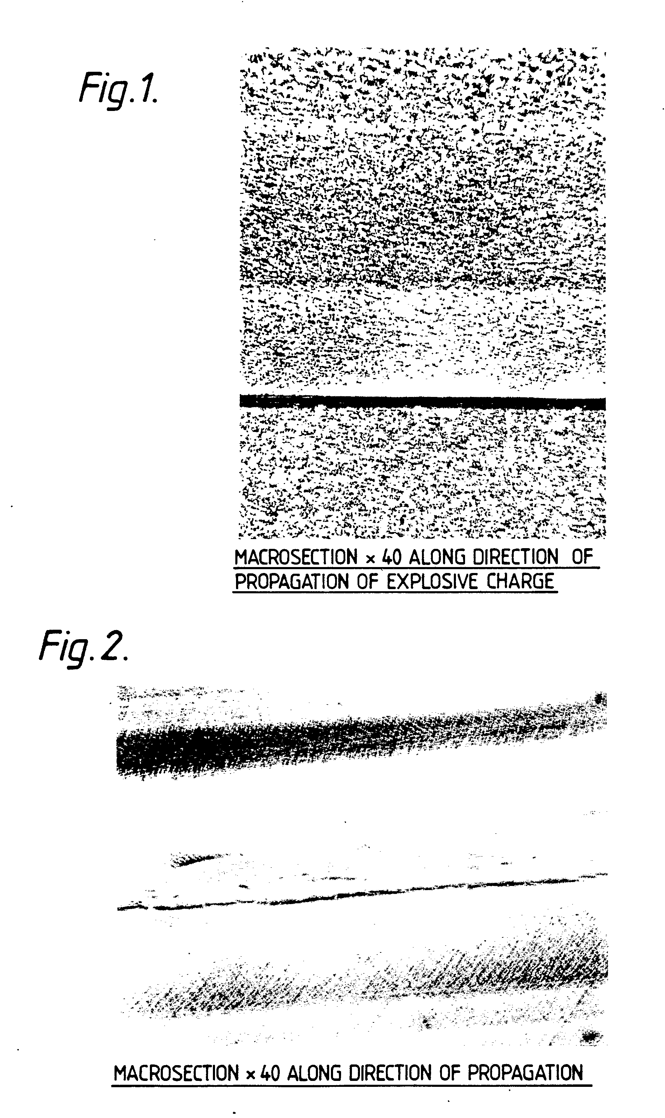

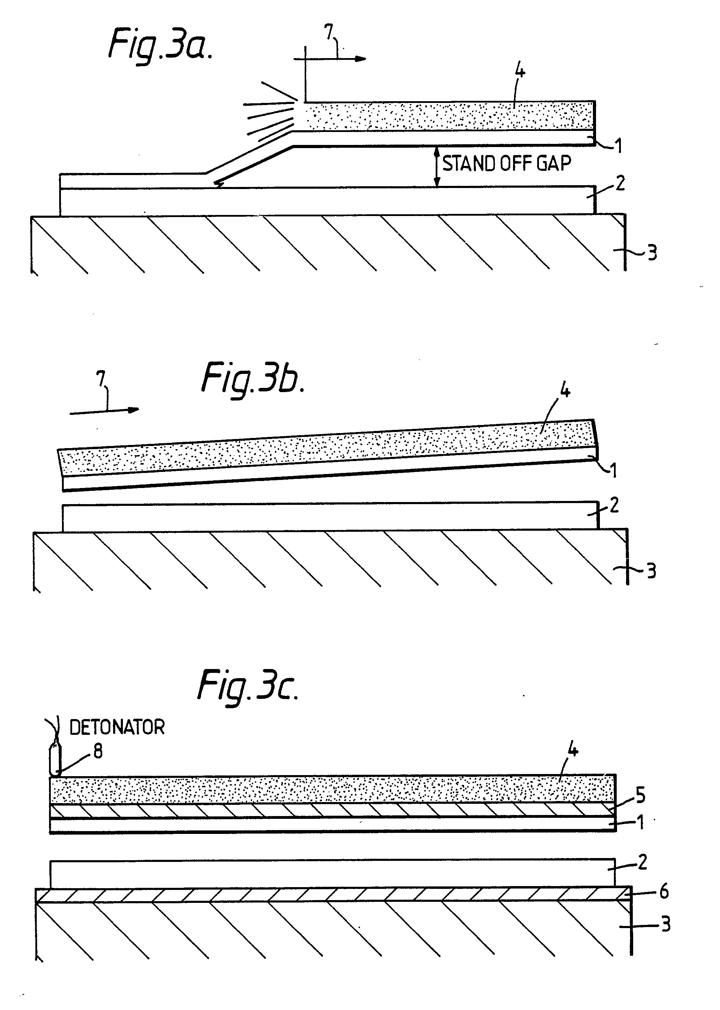

Explosive joining of two thermoplastic sheets is now described as an example of high rate forming and joining according to the invention. With a suitable, relatively slow burning, explosive such as ammonium nitrate based -giving detonation velocities less than 4000m/sec, and even below 2000m/sec, preferably 1000-1500m/sec - sheets of polyethylene nominally 10mm thick can be impacted together to form a high strength joint with a narrow interface. This interface region may appear virtually as a fine straight line zone as in Figure 1 or under suitable conditions a characteristic wave-like interface can be developed, Figure 2. For joining two sheets of polyethylene 1, 2, these may be set say 10 to 15mm apart, or alternatively at an inclined angle of 5 to 10° such as nominally 8°, (Figure 3b) with the explosive applied on the far side to force the flyer sheet 1 against the base sheet 2 which in turn is supported on a metal anvil 3, such as shown in Figure 3a. Moreover as plastics materials are susceptible to damage under explosive loading, it is convenient to add a sheet of protective material (not shown) such as hardboard, rubber or even plaster between the explosive 4 and the plastics material 1. The explosive is activated by a detonator 8. In addition it is advantageous to increase the mass of the flyer sheet 1 such as by inserting a lead sheet 6 say 2mm thick which may also serve as a protective interlayer (Figure 3c). A lead sheet 6 may also be placed between the base sheet 2 and anvil 4.

Similar high rate forming or joining techniques can be applied to dissimilar combinations of plastics materials. However, when the softening or melting temperatures are very disparate, it may be necessary to introduce a further material of intermediate properties to act as an interlayer between the principle components. Thus a multilayer weld comprises for example a flyer sheet 1, an intermediate sheet, and the base sheet 2 with appropriate standoff separation on either side of the intermediate sheet. Moreover the multilayer technique can be utilised for joining plastics material via a suitable intermediary to a metal plate. Soft metals such as aluminium, preferably with a lightly scored or alternatively heavily etched surface, may be used together with a plastic/metal composite as an intermediate. The latter may comprise explosively compacted mixtures of polymer powders and metallic powders.

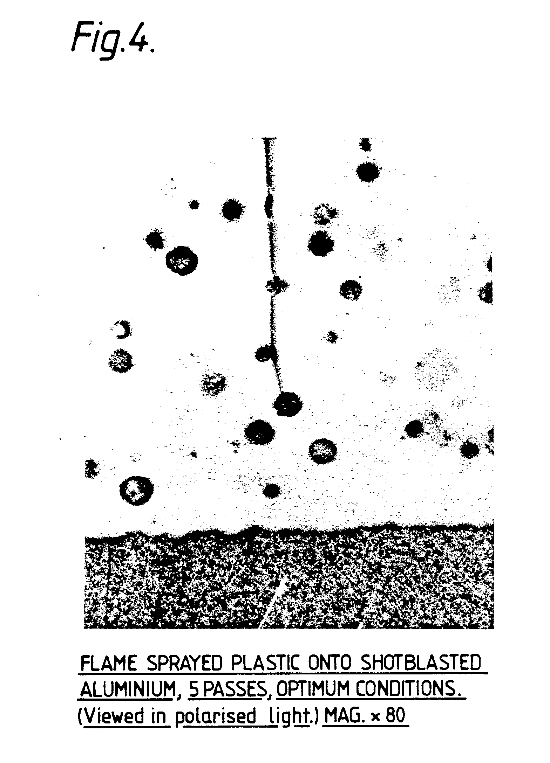

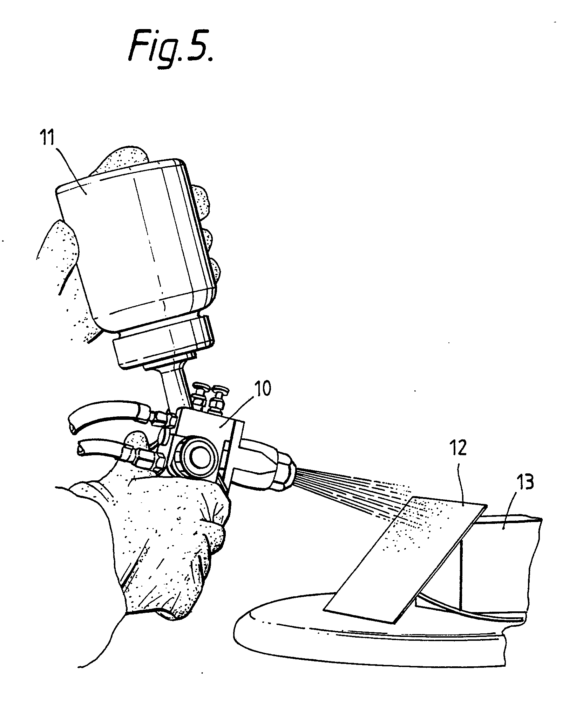

Furthermore, high rate forming and joining techniques can be used for applying plastics to plastics coated metal components. For example, polypropylene may be flame sprayed as a granulated powder onto a metal surface (which is preferably preheated to a little below the melting temperature of the sprayed coating). With a succession of sprayed coatings a nominally uniform layer of up to say 1mm thickness can be readily provided on the metal substrate, see Figure 4. High rate or explosive methods can then be used to apply a further plastics material, including fibre-reinforced thermoplastics and plastics alloys to the coated metal surface. It should be noted that not only is the plastics material bonded to the coating, but it is possible for the bonding of the coating itself to be enhanced as a result of the high rate impact. Also the metal surface can be preferably etched or lightly scored to enhance the nominal contact area and to provide some degree of mechanical interlock. Flame spraying can be conveniently carried out as illustrated in Figure 5 with conventional equipment using for example aluminium as the metal substrate. The apparatus shown in Figure 5 comprises an oxifuel gas flame gun 10 supplied with plastics powder from a reservoir 11. The powder is sprayed onto an aluminium sheet 12 supported on a mounting 13.

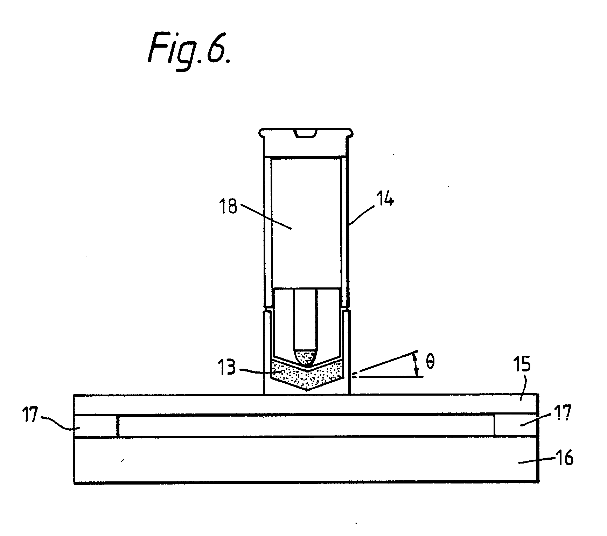

These techniques of high rate forming and joining may also be adapted for local spot welds between sheets of plastics materials. For example (see Figure 6) an explosive charge 13 may be provided in a cartridge-like capsule 14, and detonated by conventional impact means 18, or by electrical means, mounted over one plate 15 separated as a flyer from a base plate 16 by stand off spacers 17. Under suitable impact velocities the mating interfaces are bonded over a local area between the two sheets.

## Claims

1. A method of joining plastics materials, the method comprising impacting the materials together at a sufficient velocity to induce local heating and thereby bonding between the materials.

2. A method according to claim 1, wherein the materials are impacted together under the influence of an explosive charge.

3. A method according to claim 2, wherein the explosive charge comprises ammonium nitrate.

4. A method according to claim 2 or claim 3, wherein the detonation velocity is less than 4000m/sec.

5. A method according to claim 4, wherein the detonation velocity is between 1000 and 1500m/sec.

6. A method according to any of the preceding claims, wherein the plastics materials are in the form of sheets which are initially positioned at an acute angle to one another.

7. A method according to any of the preceding claims, further comprising positioning an additional member between one of the plastics materials and a source of impacting force to increase the mass of the adjacent plastics material.

8. A method according to claim 7, wherein the additional member comprises a lead sheet.

9. A method according to any of the preceding claims, further comprising positioning a protective member between one of the plastics materials and a source of impacting force.

Fig.1.

MACROSECTION × 40 ALONG DIRECTION OF
PROPAGATION OF EXPLOSIVE CHARGE

Fig.2.

MACROSECTION × 40 ALONG DIRECTION OF PROPAGATION

*Fig.3a.*

7

4

1

STAND OFF GAP

2

3

*Fig.3b.*

7

4

1

2

3

*Fig.3c.*

DETONATOR

8

4

5

1

2

6

3

# Fig.4.

FLAME SPRAYED PLASTIC ONTO SHOTBLASTED
ALUMINIUM, 5 PASSES, OPTIMUM CONDITIONS.
(Viewed in polarised light.) MAG. × 80

Fig.5.

# Fig.6.

| DOCUMENTS CONSIDERED TO BE RELEVANT | | | EP 88309312.2 |
|---|---|---|---|
| Category | Citation of document with indication, where appropriate, of relevant passages | Relevant to claim | CLASSIFICATION OF THE APPLICATION (Int Cl 4) |
| Y | EP - A1 - 0 117 153 (FOSTER WHEELER ENERGY CORPORATION)<br><br>* Abstract; fig. 1 *<br><br>-- | 1-9 | B 29 C 65/02 |
| Y | AT - B - 290 266 (FRIED.KRUPP)<br><br>* Claim 2; fig. 1 *<br><br>-- | 1-9 | |
| A | DE - B - 1 261 379 (E.I. DU PONT DE NEMOURS)<br><br>* Column 4, lines 3-19,49-54 *<br><br>-- | 1-4 | |
| A | DE - B - 1 527 513 (ASAHI KASEI KOGYO)<br><br>* Column 3, lines 65-68; column 4, lines 1-14 *<br><br>-- | 1-4 | |
| A | US - A - 3 263 324 (POPOFF)<br><br>* Totality *<br><br>---- | | TECHNICAL FIELDS SEARCHED (Int. Cl 4)<br><br>B 23 K<br>B 29 C<br>B 29 D |

The present search report has been drawn up for all claims

| Place of search | Date of completion of the search | Examiner |
|---|---|---|
| VIENNA | 15-03-1989 | REININGER |

EPO Form 1503 03 82